# EUROPEAN PATENT SPECIFICATION

(11) **EP 3 966 090 B1**
(45) Date of publication and mention of the grant of the patent: **07.06.2023**
(21) Application number: 20725964.9
(22) Date of filing: 06.05.2020
(51) Int. Cl.: B62D 53/08

(54) **A SEMITRAILER TOWING VEHICLE COMPRISING A FIFTH WHEEL ASSEMBLY**
SATTELSCHLEPPERFAHRZEUG MIT EINER SATTELKUPPLUNG
VÉHICULE TRACTEUR DE SEMI-REMORQUE COMPRENANT UN ENSEMBLE CINQUIÈME ROUE

(30) Priority: 06.05.2019 NL 2023076
(43) Date of publication of application: 16.03.2022
(73) Proprietor: DAF Trucks N.V., 5643 TW Eindhoven (NL)
(72) Inventor: VAN KNIPPENBERG, Ronald Antonius Johannes, 5643 TW Eindhoven (NL); RAUE, Victor, 5643 TW Eindhoven (NL)
(74) Representative: V.O.
(86) International application number: PCT/NL2020/050288
(87) International publication number: WO 2020/226494

(56) References cited:
- EP-A1- 0 538 893
- EP-A2- 0 047 400
- DE-A1-102016 208 457

## Description

The invention relates to a semitrailer towing vehicle comprising a fifth wheel assembly comprising bearing blocks and a fifth wheel plate which is mounted on the bearing blocks such that it can pivot about an axis extending transversely to the direction of travel, the bearing blocks being fastened to a corrugated mounting plate, said corrugated mounting plate being attached to a chassis of the semitrailer towing vehicle, said corrugated mounting plate having upper portions and lower portions, the distance between the upper and lower portions defining a height of the corrugated mounting plate, the upper portions being positioned closer to the fifth wheel plate than the lower portions, the bearing blocks being fastened to the corrugated mounting plate by bolts which pass through first holes provided in the bearing blocks and second holes provided in the corrugated mounting plate.

Such a semitrailer towing vehicle comprising a fifth wheel assembly is e.g. known from EP0538893B1. In order to provide a fifth wheel having a predetermined height (measured from the lower surface of a bearing block to the upper surface of the fifth wheel plate) with several different constructional heights - which depend e.g. on different needs of different vehicle operators (tank trucks, heavy duty vehicles, volume transporter) - the semitrailer towing vehicle according to EP0538893B1 comprises a height adapter between the bearing blocks and the corrugated mounting plate. Further, in order to prevent that tensile, shear and possibly side forces generated during operation of the fifth wheel act on the bolts as shear forces in the direction of travel in front of and behind both the mounting plate and the height adapter thrust plates are used which are welded on the chassis and on the mounting plate, respectively. In addition, to avoid shear forces on the bolts the first holes in the bearing blocks and the second holes in the mounting plate are oversized in comparison to the bolts. It has, however, appeared that there is a need of different vehicle operators for a semitrailer towing vehicle comprising a fifth wheel assembly having a constructional height (measured from the lower surface of the lower portions of the corrugated mounting plate to the upper surface of the fifth wheel plate) which is reduced in comparison to the constructional heights that can be provided by the semitrailer towing vehicle comprising a fifth wheel assembly known from EP0538893B1. In addition, it has appeared that the use of welded thrust plates increases the costs and complexity of the construction of a semitrailer towing vehicle comprising a fifth wheel assembly.

It is therefore amongst other things an object of the invention to provide a semitrailer towing vehicle comprising a fifth wheel assembly having a relatively small constructional height. It is another object of the invention to provide a semitrailer towing vehicle comprising a fifth wheel assembly having a relatively simple construction. It is a further object of the invention to provide an alternative semitrailer towing vehicle comprising a fifth wheel assembly.

According to the invention at least one of these objects is obtained by a semitrailer towing vehicle comprising a fifth wheel assembly comprising bearing blocks and a fifth wheel plate which is mounted on the bearing blocks such that it can pivot about an axis extending transversely to the direction of travel, the bearing blocks being fastened to a corrugated mounting plate, said corrugated mounting plate being attached to a chassis of the semitrailer towing vehicle, said corrugated mounting plate having upper portions and lower portions, the distance between the upper and lower portions defining a height of the corrugated mounting plate, the upper portions being positioned closer to the fifth wheel plate than the lower portions, the bearing blocks being fastened to the corrugated mounting plate by bolts which pass through first holes provided in the bearing blocks and second holes provided in the corrugated mounting plate, characterized in that the bolts have a head height of 0.25 - 0.4 times the shank diameter of the bolts, in that the head height of the bolts is smaller than the height of the corrugated mounting plate and in that the heads of the bolts engage a lower surface of an upper portion of the corrugated mounting plate, said lower surface being positioned opposite the fifth wheel plate. By this construction, in particular due to the fact that the bolts have a head height of 0.25 - 0.4 times the shank diameter of the bolts and that the heads of the bolts engage a lower surface of an upper portion of the corrugated mounting plate the constructional height measured from the lower surface of the lower portions of the corrugated mounting plate to the upper surface of the fifth wheel plate can be reduced in comparison to EP0538893B1 since amongst other things the height of the corrugated mounting plate can be reduced. Since it is the head of the bolt having a very low head that engages a lower surface of an upper portion of the corrugated mounting plate instead of the nut that engages a lower surface of an upper portion of the corrugated mounting plate the height of the corrugated mounting plate can be very small while it is still possible that the head of the bolts can be accommodated in the space defined by the height of the corrugated mounting plate.

In an embodiment of a semitrailer towing vehicle according to the invention the first holes provided in the bearing blocks are elongated holes, each having a first short diameter in transverse direction and a first long diameter in longitudinal direction, said first long diameter being larger than the first short diameter, the second holes in the corrugated mounting plate being circular and having a uniform second diameter. Preferably the first short diameter of the first holes in the bearing blocks is equal to the second diameter of the second holes in the corrugated mounting plate. In addition, since the first long diameter is larger than the first short diameter, i.e. the first holes in the bearing blocks are oversized in the longitudinal direction in comparison to the bolts it is prevented that shear forces in this direction act on the bolts. Preferably the first short diameter is 18 mm.

In a further embodiment of semitrailer towing vehicle according to the invention the bolts have a uniform shank diameter. Bolts having a uniform shank diameter can be manufactured relatively easily, and in particular when the shank of the bolts have a diameter such that the shank of the bolts tightly fits in the transverse direction of the elongated holes provided in the bearing blocks of the fifth wheel assembly, i.e. the diameter of the shank matches the first short diameter, in contrast to the construction of EP0538893B1 in which the bolts loosely fit in the first holes of the bearing blocks, the shear forces generated in transverse direction during operation of the fifth wheel directly act on the bolts as a result of which it is possible to dispense of the thrust plates used in EP0538893B1, thereby making the construction of the semitrailer towing vehicle comprising a fifth wheel assembly relatively simple. The construction of the fifth wheel has sufficient strength amongst other things as a result of the holes being circular and that the bolts are in engagement in transverse direction with the inner surface of the first holes in the bearing blocks as a result of the tight fit.

In a still further embodiment of a semitrailer towing vehicle according to the invention the head of the bolt comprises a flange having a diameter larger than a diameter of the head. In this manner the engagement surface of the head of the bolt and the lower surface of the upper portion of the corrugated mounting plate is enlarged, thereby being able to provide an improved attachment of the fifth wheel assembly to the corrugated mounting plate.

In a further embodiment of a semitrailer towing vehicle according to the invention the bolts have a ribbed neck, the ribbed neck at least engaging an inside of a second hole in the corrugated mounting plate. By using a ribbed neck the bolts can be pressed in the second holes of the corrugated mounting plate and as a result of the ribbed neck rotation of the bolts in the holts is prevented, thereby increasing the strength of the construction of the fifth wheel.

In another embodiment of a semitrailer towing vehicle according to the invention the first short diameter of the first holes in the bearing blocks is smaller than the second diameter of the second holes in the corrugated mounting plate, . the bolts having a circular neck adjacent the head, the circular neck having a neck diameter such that the circular neck of the bolts fits in the second holes provided in the corrugated mounting plate, and that the height of the circular neck is smaller than a thickness of the corrugated mounting plate. Preferably the second diameter of the second holes is 23 mm and the neck diameter of the bolts is 21 mm. By using this new specific bolt with a circular neck fitting in the larger second holes a fifth wheel assembly having a relatively small constructional height can be obtained in an easy manner, while still providing sufficient strength to the connection of the fifth wheel assembly to the corrugated mounting plate to withstand the forces exerted thereon during operation of the semitrailer towing vehicle.

In a still further embodiment of a semitrailer towing vehicle according to the invention the shank of the bolts have a diameter such that the shank of the bolts tightly fits in the transverse direction of the elongated holes provided in the bearing blocks of the fifth wheel assembly. In contrast to the construction of EP0538893B1 in which the bolts loosely fit in the first holes since these first holes are required to be oversized, the shear forces generated during operation of the fifth wheel in the transverse direction now act on the bolts as a result of the tight fit, which makes it possible to dispense of the thrust plates used in EP0538893B1, thereby making the construction of the semitrailer towing vehicle comprising a fifth wheel assembly relatively simple.

In another embodiment of a semitrailer towing vehicle according to the invention the bolts are M16 bolts, in particular 10.9 grade bolts are sufficiently strong to withstand the shear forces generated during operation of the semitrailer towing vehicle.

In a still further embodiment of a semitrailer towing vehicle according to any the invention the corrugated mounting plate is made of S600MC and has a thickness of between 3 and 9 mm, preferably the corrugated mounting plate has a thickness of 6 mm. The corrugated mounting plate preferably has a weight of 30 kg or less. As a result of the relatively small thickness of the corrugated mounting plate, the constructional height can be reduced further in comparison with the usual thickness of corrugated mounting plates of about 12 mm. Since the weight of the corrugated mounting plate is reduced to below 30 kg while still providing sufficient strength to the fifth wheel assembly, the total weight of the semitrailer towing vehicle comprising a fifth wheel assembly is reduced thereby providing a possibility to reduce the usage of fuel during operation of the semitrailer towing vehicle.

The invention will be further explained with reference to the Figures, in which non-limiting exemplary embodiments of a semitrailer towing vehicle comprising a fifth wheel assembly according to the invention are shown:
Fig. 1 shows an embodiment of a semitrailer towing vehicle comprising a fifth wheel assembly according to the invention in cross section;
Fig. 2 shows a top view of a corrugated mounting plate of the semitrailer towing vehicle comprising a fifth wheel assembly of Figure 1;
Figs. 3A, 3B and 3C show different embodiments of bolts connecting a mounting plate to a bearing block of a semitrailer towing vehicle comprising a fifth wheel assembly according to the invention;
Figs. 4A - 4D show different embodiments of bolts to be used for connecting a mounting plate to a bearing block of a semitrailer towing vehicle comprising a fifth wheel assembly according to the invention; and
Fig. 5 shows a top view of an elongated first hole provided in a bearing block of a fifth wheel assembly as shown in Figure 1.

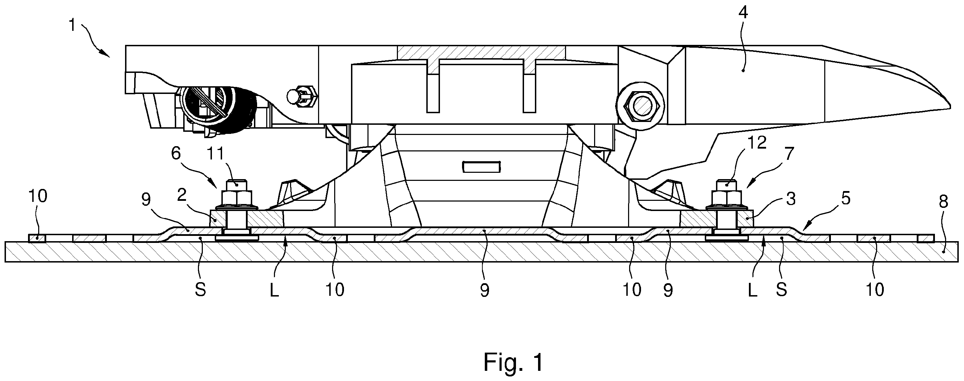

In Fig. 1 an embodiment of a semitrailer towing vehicle comprising a fifth wheel assembly 1 according to the invention is schematically shown in cross section. The fifth wheel assembly 1 comprises bearing blocks 2, 3 and a fifth wheel plate 4 mounted on the bearing blocks 2, 3. The fifth wheel plate 4 is mounted in such manner on the bearing blocks 2, 3 that it can pivot about an axis extending transversely to the direction of travel as is known in the art. Please note that throughout this description the same reference numerals are used for indicating identical parts.

The bearing blocks 2, 3 are fastened to a corrugated mounting plate 5 by means of bolt and nut elements 6, 7. The corrugated mounting plate 4 is attached to a chassis 8 of the semitrailer towing vehicle.

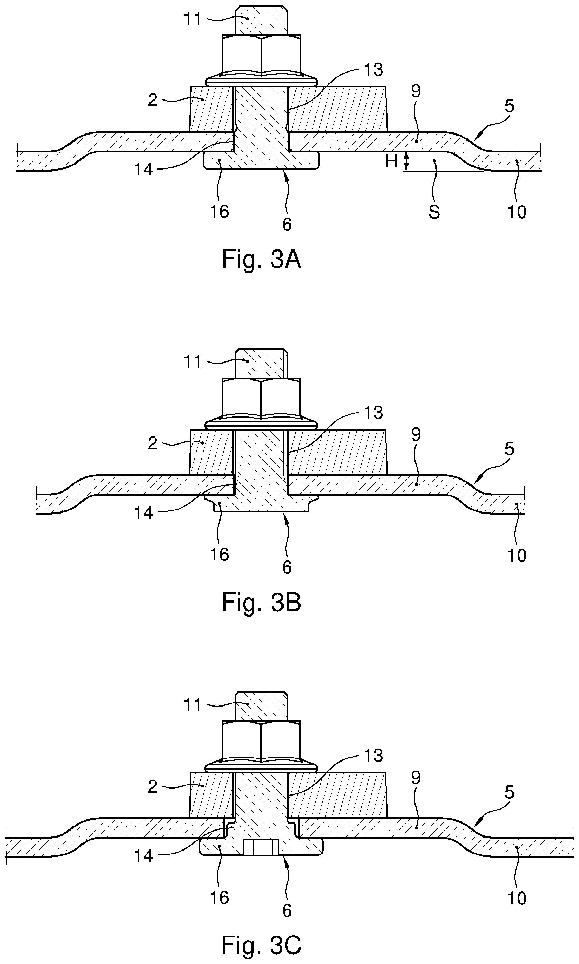

The corrugated mounting plate 5 has upper portions 9 and lower portions 10, which lower portions 10 are in contact with the chassis 8. The distance H (see Figure 3A) between the upper portions 9 and lower portions 10 define the height H of the corrugated mounting plate 5. The upper portions 9 are positioned closer to the fifth wheel plate 4 than the lower portions 10.

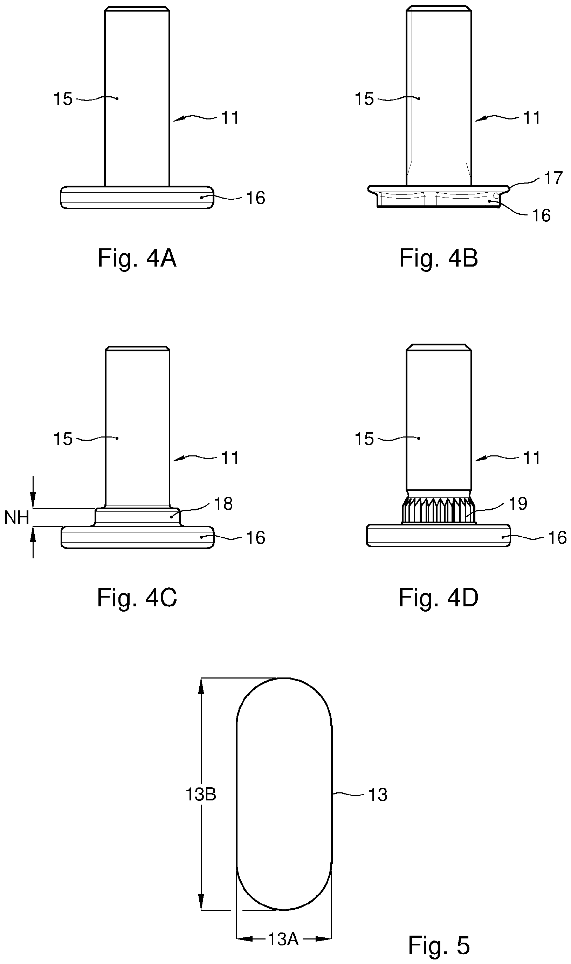

The bearing blocks 2, 3 are fastened to the corrugated mounting plate 5 by bolts 11, 12 which pass through first holes 13 (see Figures 3) provided in the bearing blocks 2 and second holes 14 provided in the corrugated mounting plate 5. The first holes 13 provided in the bearing blocks 2, 3 are elongated holes as shown in Figure 5. Each first hole 13 has a first short diameter 13A in transverse direction and a first long diameter 13B in longitudinal direction of the elongated first hole 13. The first long diameter 13B is larger than the first short diameter 13A. In the embodiments shown in the Figures the first short diameter 13A is 18 mm.

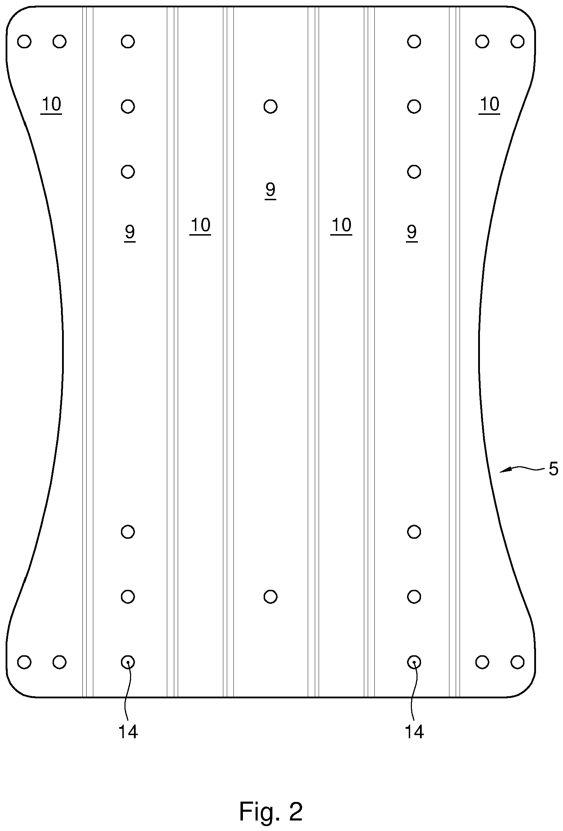

In the embodiments shown in the Figures the second holes 14 (see also Figure 2) in the corrugated mounting plate 5 are circular and have a uniform second diameter. The second diameter of the second holes 14 can be identical to the first short diameter 13A of the first holes 13 (as shown in the embodiments of Figures 3A and 3B) or can be larger (as shown in the embodiment of Figure 3C) than the first short diameter 13A of the first holes 13. In this latter embodiment the second diameter of the second holes 14 is 23 mm.

The diameter of the shanks 15 of the bolts 11 is such that the shanks 15 of the bolts 11 tightly fit in the transverse direction of the elongated first holes 13 provided in the bearing blocks 2, 3 as indicated in Figures 3A-C, that is the diameter of the shanks 15 of the bolts 11 matches the first short diameter 13A. The height of the heads 16 of the bolts 11 is 0.25 - 0.4 times the shank diameter of the bolts 11, and the bolts are therefore herein also called low head bolts.

As shown in Figure 1 the head height of the bolts 11 is smaller than the height H of the corrugated mounting plate 5 and since the heads 16 of the bolts 11 engage a lower surface L (positioned opposite the fifth wheel plate 4) of an upper portion 9 of the corrugated mounting plate 5 the heads of the low head bolts 11 fit in the space S (see Figures 1 and 3) below the upper portion 9 of the corrugated mounting plate 5.

The corrugated mounting plate 5 as used in the embodiments shown is made of S600MC and has a thickness of 6 mm. In other embodiments the thickness of the corrugated mounting plate 5 can be between 3 and 9 mm. The weight of the corrugated mounting plate 5 in the shown embodiments is 27 kg. The weight of the corrugated mounting plate 5 can in other embodiments have other values, however it is preferred that the weight is 30 kg or less.

In Figures 4A-4D some embodiments of low head bolts 11 which can be used in a semitrailer towing vehicle comprising a fifth wheel assembly according to the invention are schematically shown. In the embodiments shown in Figures 4A and 4B the low heads bolts 11 have a shank 15 having a uniform diameter. The difference between the embodiment shown in Figure 4A (also shown in Figure 3A) and the embodiment shown in Figure 4B is that in the embodiment shown in Figure 4B (also shown in Figure 3B) the head 16 of the bolt 15 comprises a flange 17 having an extended diameter, i.e. having a diameter larger than a diameter of the head 16.

In the embodiment shown in Figure 3C and 4C the bolt 11 has a circular neck 18 adjacent the head 16. The diameter of the circular neck 18 is such that the circular neck 18 of the bolt 11 tightly fits in the larger second hole 14 provided in the corrugated mounting plate 5. The height NH of the circular neck 18 is smaller than a thickness of the corrugated mounting plate 5, so that the circular neck 18 can only engage the inside of the second hole 14 of the corrugated mounting plate 5. The circular neck 18 can have a smooth surface as indicated in Figure 4C. In an alternative embodiment the neck 19 is ribbed as shown in the embodiment of Figure 4D, the ribbed neck 19 engaging an inside of a second hole 14 in the corrugated mounting plate 5. Such a bolt 11 with a ribbed neck 19 can be pressed into the second hole 14 of the corrugated mounting plate during assembly of the fifth wheel assembly.

The bolts 11, 12 used in the shown embodiments of the semitrailer towing vehicle according to the invention are preferably 10.9 grade, M16 bolts. The inventive low head bolts 11, 12 of this material are sufficiently strong to withstand the shear forces generated during operation of the semitrailer towing vehicle.

## Claims

1. A semitrailer towing vehicle comprising a fifth wheel assembly (1) comprising bearing blocks (2, 3) and a fifth wheel plate (4) which is mounted on the bearing blocks (2, 3) such that it can pivot about an axis extending transversely to the direction of travel, the bearing blocks (2, 3) being fastened to a corrugated mounting plate (5), said corrugated mounting plate (5) being attached to a chassis (8) of the semitrailer towing vehicle, said corrugated mounting plate (5) having upper portions (9) and lower portions (10), the distance (H) between the upper and lower portions (9, 10) defining a height of the corrugated mounting plate (5), the upper portions (9) being positioned closer to the fifth wheel plate (4) than the lower portions (10), the bearing blocks (2, 3) being fastened to the corrugated mounting plate (5) by bolts (11, 12) which pass through first holes (13) provided in the bearing blocks (2, 3) and second holes (14) provided in the corrugated mounting plate (5), **characterized in that** the bolts (11, 12) have a head height of 0.25 - 0.4 times the shank diameter of the bolts (11, 12), **in that** the head height of the bolts (11, 12) is smaller than the height of the corrugated mounting plate (5) and **in that** the heads (16) of the bolts (11, 12) engage a lower surface (L) of an upper portion (9) of the corrugated mounting plate (5), said lower surface (L) being positioned opposite the fifth wheel plate (4).

2. The semitrailer towing vehicle according to claim 1, **characterized in that** the first holes (13) provided in the bearing blocks (2, 3) are elongated holes, each having a first short diameter (13A) in transverse direction and a first long diameter (13B) in longitudinal direction, said first long diameter (13B) being larger than the first short diameter (13A), and **in that** the second holes (14) in the corrugated mounting plate (5) are circular and have a uniform second diameter.

3. The semitrailer towing vehicle according to claim 2, **characterized in that** the first short diameter (13A) of the first holes (13) in the bearing blocks (2, 3) is equal to the second diameter of the second holes (14) in the corrugated mounting plate (5).

4. The semitrailer towing vehicle according to any one of the preceding claims, **characterized in that** the bolts (11, 12) have a uniform shank diameter.

5. The semitrailer towing vehicle according to claim 4, **characterized in that** the head (16) of the bolt (11, 12) comprises a flange (17) having a diameter larger than a diameter of the head (16).

6. The semitrailer towing vehicle according to claim 1, 2 or 3, **characterized in that** the bolts (11, 12) have a ribbed neck (19), the ribbed neck (19) at least engaging an inside of a second hole (14) in the corrugated mounting plate (5).

7. The semitrailer towing vehicle according to claim 2, **characterized in that** the first short diameter (13A) of the first holes (13) in the bearing blocks (2, 3) is smaller than the second diameter of the second holes (14) in the corrugated mounting plate (5), **in that** the bolts (11, 12) have a circular neck (18) adjacent the head (16), the circular neck (18) having a neck diameter such that the circular neck (18) of the bolts (11, 12) fits in the second holes (14) provided in the corrugated mounting plate (5), and **in that** the height of the circular neck (18) is smaller than a thickness of the corrugated mounting plate (5).

8. The semitrailer towing vehicle according to any one of claims 4, 5 or 6 when dependent on claim 2 or according to claim 7, **characterized in that** the shank (15) of the bolts (11, 12) having a diameter such that the shank (15) of the bolts (11, 12) tightly fits in the transverse direction of the elongated holes (13) provided in the bearing blocks (2, 3) of the fifth wheel assembly (1).

9. The semitrailer towing vehicle according to at least claim 2, **characterized in that** the first short diameter (13A) is 18 mm.

10. The semitrailer towing vehicle according to claim 7, **characterized in that** the second diameter of the second holes (14) is 23 mm, and the neck diameter of the bolts (11, 12) is 21 mm.

11. The semitrailer towing vehicle according to any one of the preceding claims, **characterized in that** the bolts (11, 12) are M16 bolts.

12. The semitrailer towing vehicle according to any one of the preceding claims, **characterized in that** the bolts (11, 12) are 10.9 grade bolts.

13. The semitrailer towing vehicle according to any one of the preceding claims, **characterized in that** the corrugated mounting plate (5) is made of S600MC and has a thickness of between 3 and 9 mm, preferably the corrugated mounting plate (5) has a thickness of 6 mm.

14. The semitrailer towing vehicle according to claim 13, **characterized in that** the corrugated mounting plate (5) has a weight of 30 kg or less.

## Patentansprüche

1. Sattelzugfahrzeug mit einer Sattelkupplungsbaugruppe (1), die Lagerböcke (2, 3) und eine Sattelkupplungsplatte (4), die um eine quer zur Fahrtrichtung verlaufende Achse schwenkbar an den Lagerböcken (2, 3) montiert ist, aufweist, wobei die Lagerböcke (2, 3) an einer gewellten Montageplatte (5) befestigt sind, wobei die gewellte Montageplatte (5) an einem Fahrgestell (8) des Sattelzugfahrzeugs angebracht ist, wobei die gewellte Montageplatte (5) obere Abschnitte (9) und untere Abschnitte (10) aufweist, wobei der Abstand (H) zwischen dem oberen und unteren Abschnitt (9, 10) eine Höhe der gewellten Montageplatte (5) definiert, wobei die oberen Abschnitte (9) näher an der Sattelkupplungsplatte (4) positioniert sind als die unteren Abschnitte (10), wobei die Lagerblöcke (2, 3) an der gewellten Montageplatte (5) durch Bolzen (11, 12) befestigt sind, die durch erste Löcher (13), die in den Lagerblöcken (2, 3) bereitgestellt sind, und zweite Löcher (14), die in der gewellten Montageplatte (5) bereitgestellt sind, hindurchgehen, **dadurch gekennzeichnet, dass** die Bolzen (11, 12) eine Kopfhöhe vom 0,25-bis 0,4-fachen des Schaftdurchmessers der Bolzen (11, 12) aufweisen, dass die Kopfhöhe der Bolzen (11, 12) kleiner als die Höhe der gewellten Montageplatte (5) ist und dass die Köpfe (16) der Bolzen (11, 12) in eine untere Fläche (L) eines oberen Abschnitts (9) der gewellten Montageplatte (5) eingreifen, wobei die untere Fläche (L) gegenüber der Sattelkupplungsplatte (4) positioniert ist.

2. Sattelzugfahrzeug nach Anspruch 1, **dadurch gekennzeichnet, dass** die in den Lagerböcken (2, 3) bereitgestellten ersten Löcher (13) Langlöcher sind, die jeweils einen ersten kurzen Durchmesser (13A) in Querrichtung und einen ersten langen Durchmesser (13B) in Längsrichtung aufweisen, wobei der erste lange Durchmesser (13B) größer ist als der erste kurze Durchmesser (13A), und dass die zweiten Löcher (14) in der gewellten Montageplatte (5) kreisförmig sind und einen einheitlichen zweiten Durchmesser aufweisen.

3. Sattelzugfahrzeug nach Anspruch 2, **dadurch gekennzeichnet, dass** der erste kurze Durchmesser (13A) der ersten Löcher (13) in den Lagerböcken (2, 3) gleich dem zweiten Durchmesser der zweiten Löcher (14) in der gewellten Montageplatte (5) ist.

4. Sattelzugfahrzeug nach einem der vorhergehenden Ansprüche, **dadurch gekennzeichnet, dass** die Bolzen (11, 12) einen einheitlichen Schaftdurchmesser aufweisen.

5. Sattelzugfahrzeug nach Anspruch 4, **dadurch gekennzeichnet, dass** der Kopf (16) des Bolzens (11, 12) einen Flansch (17) umfasst, dessen Durchmesser größer als der Durchmesser des Kopfes (16) ist.

6. Sattelzugfahrzeug nach Anspruch 1, 2 oder 3, **dadurch gekennzeichnet, dass** die Bolzen (11, 12) einen gerippten Hals (19) aufweisen, wobei der gerippte Hals (19) wenigstens in eine Innenseite eines zweiten Lochs (14) in der gewellten Montageplatte (5) eingreift.

7. Sattelzugfahrzeug nach Anspruch 2, **dadurch gekennzeichnet, dass** der erste kurze Durchmesser (13A) der ersten Löcher (13) in den Lagerböcken (2, 3) kleiner ist als der zweite Durchmesser der zweiten Löcher (14) in der gewellten Montageplatte (5), dass die Bolzen (11, 12) einen kreisförmigen Hals (18) neben dem Kopf (16) aufweisen, dass die Bolzen (11, 12) einen kreisförmigen Hals (18) in der Nähe des Kopfes (16) aufweisen, wobei der kreisförmige Hals (18) einen solchen Halsdurchmesser aufweist, dass der kreisförmige Hals (18) der Bolzen (11, 12) in den zweiten Löchern (14) anliegt, die in der gewellten Montageplatte (5) bereitgestellt sind, und dass die Höhe des kreisförmigen Halses (18) kleiner als eine Dicke der gewellten Montageplatte (5) ist.

8. Sattelzugfahrzeug nach einem der Ansprüche 4, 5 oder 6 in Abhängigkeit von Anspruch 2 oder nach Anspruch 7, **dadurch gekennzeichnet, dass** der Schaft (15) der Bolzen (11, 12) einen solchen Durchmesser aufweist, dass der Schaft (15) der Bolzen (11, 12) in Querrichtung der in den Lagerböcken (2, 3) der Sattelkupplungsbaugruppe (1) bereitgestellten Langlöcher (13) dicht anliegt.

9. Sattelzugfahrzeug nach wenigstens Anspruch 2, **dadurch gekennzeichnet, dass** der erste kurze Durchmesser (13A) 18 mm beträgt.

10. Sattelzugfahrzeug nach Anspruch 7, **dadurch gekennzeichnet, dass** der zweite Durchmesser der zweiten Löcher (14) 23 mm und der Halsdurchmesser der Bolzen (11, 12) 21 mm beträgt.

11. Sattelzugfahrzeug nach einem der vorhergehenden Ansprüche, **dadurch gekennzeichnet, dass** die Bolzen (11, 12) M16-Bolzen sind.

12. Sattelzugfahrzeug nach einem der vorhergehenden Ansprüche, **dadurch gekennzeichnet, dass** die Bolzen (11, 12) Bolzen der Güte 10,9 sind.

13. Sattelzugfahrzeug nach einem der vorhergehenden Ansprüche, **dadurch gekennzeichnet, dass** die gewellte Montageplatte (5) aus S600MC besteht und eine Dicke zwischen 3 und 9 mm aufweist, wobei die gewellte Montageplatte (5) eine Dicke von 6 mm vorzugsweise aufweist.

14. Sattelzugfahrzeug nach Anspruch 13, **dadurch gekennzeichnet, dass** die gewellte Montageplatte (5) ein Gewicht von 30 kg oder weniger aufweist.

## Revendications

1. Véhicule tracteur de semi-remorque comprenant une sellette d'attelage (1) comprenant des blocs d'appui (2, 3) et une plaque de sellette d'attelage (4) montée sur les blocs d'appui (2, 3) de manière à pouvoir pivoter autour d'un axe s'étendant transversalement à la direction de déplacement, les blocs d'appui (2, 3) sont fixés à une plaque de montage ondulée (5), ladite plaque de montage ondulée (5) étant fixée à un châssis (8) du véhicule tracteur de semi-remorque, ladite plaque de montage ondulée (5) ayant des parties supérieures (9) et des parties inférieures (10), la distance (H) entre les parties supérieure et inférieure (9, 10) définissant une hauteur de la plaque de montage ondulée (5), les parties supérieures (9) étant positionnées plus près du plateau de la sellette d'attelage (4) que les parties inférieures (10), les blocs d'appui (2, 3) sont fixés à la plaque de montage ondulée (5) par des boulons (11, 12) qui traversent les premiers trous (13) prévus dans les blocs d'appui (2, 3) et les seconds trous (14) prévus dans la plaque de montage ondulée (5), **caractérisés en ce que** les boulons (11, 12) ont une hauteur de tête de 0,25 à 0,4 fois le diamètre de la tige des boulons (11, 12), **en ce que** la hauteur de la tête des boulons (11, 12) est inférieure à la hauteur de la plaque de montage ondulée (5) et **en ce que** les têtes (16) des boulons (11, 12) s'engagent dans une surface inférieure (L) d'une partie supérieure (9) de la plaque de montage ondulée (5), ladite surface inférieure (L) étant positionnée en face de la plaque de la sellette d'attelage (4).

2. Véhicule tracteur de semi-remorque selon la revendication 1, **caractérisé en ce que** les premiers trous (13) prévus dans les blocs d'appui (2, 3) sont des trous allongés, chacun ayant un premier diamètre court (13A) dans la direction transversale et un premier diamètre long (13B) dans la direction longitudinale, ledit premier diamètre long (13B) étant plus grand que le premier diamètre court (13A), et **en ce que** les seconds trous (14) dans la plaque de montage ondulée (5) sont circulaires et ont un second diamètre uniforme.

3. Véhicule tracteur de semi-remorque selon la revendication 2, **caractérisé en ce que** le premier diamètre court (13A) des premiers trous (13) dans les blocs d'appui (2, 3) est égal au second diamètre des seconds trous (14) dans la plaque de montage ondulée (5).

4. Véhicule tracteur de semi-remorque selon l'une quelconque des revendications précédentes, **caractérisé en ce que** les boulons (11, 12) ont un diamètre de tige uniforme.

5. Véhicule tracteur de semi-remorque selon la revendication 4, **caractérisé en ce que** la tête (16) du boulon (11, 12) comprend une bride (17) ayant un diamètre supérieur à un diamètre de la tête (16).

6. Véhicule tracteur de semi-remorque selon la revendication 1, 2 ou 3, **caractérisé en ce que** les boulons (11, 12) ont un col nervuré (19), le col nervuré (19) s'engageant au moins à l'intérieur d'un second trou (14) dans la plaque de montage ondulée (5).

7. Véhicule tracteur de semi-remorque selon la revendication 2, **caractérisé en ce que** le premier diamètre court (13A) des premiers trous (13) dans les blocs d'appui (2, 3) est plus petit que le second diamètre des seconds trous (14) dans la plaque de montage ondulée (5), **en ce que** les boulons (11, 12) ont un col circulaire (18) adjacent à la tête (16), le col circulaire (18) a un diamètre de col tel que le col circulaire (18) des boulons (11, 12) s'insère dans les seconds trous (14) prévus dans la plaque de montage ondulée (5), et que la hauteur du col circulaire (18) est inférieure à l'épaisseur de la plaque de montage ondulée (5).

8. Véhicule tracteur de semi-remorque selon l'une quelconque des revendications 4, 5 ou 6 lorsqu'elle dépend de la revendication 2 ou selon la revendication 7, **caractérisé en ce que** la tige (15) des boulons (11, 12) a un diamètre tel que la tige (15) des boulons (11, 12) s'insère étroitement dans la direction transversale des trous allongés (13) prévus dans les blocs d'appui (2, 3) de l'ensemble de la sellette d'attelage (1).

9. Véhicule tracteur de semi-remorque selon au moins la revendication 2, **caractérisé par le fait que** le premier diamètre court (13A) est de 18 mm.

10. Véhicule tracteur de semi-remorque selon la revendication 7, **caractérisé en ce que** le second diamètre des seconds trous (14) est de 23 mm, et que le diamètre du col des boulons (11, 12) est de 21 mm.

11. Véhicule tracteur de semi-remorque selon l'une quelconque des revendications précédentes, **caractérisé en ce que** les boulons (11, 12) sont des boulons M16.

12. Véhicule tracteur de semi-remorque selon l'une quelconque des revendications précédentes, **caractérisé par le fait que** les boulons (11, 12) sont des boulons de classe 10,9.

13. Véhicule tracteur de semi-remorque selon l'une quelconque des revendications précédentes, **caractérisé en ce que** la plaque de montage ondulée (5) est en S600MC et a une épaisseur comprise entre 3 et 9 mm, de préférence la plaque de montage ondulée (5) a une épaisseur de 6 mm.

14. Véhicule tracteur de semi-remorque selon la revendication 13, **caractérisé en ce que** la plaque de montage ondulée (5) a un poids de 30 kg ou moins.
